# EUROPEAN PATENT APPLICATION

(11) **EP 2 154 797 A1**
(43) Date of publication of application: **17.02.2010**
(21) Application number: 08783957.7
(22) Date of filing: 12.08.2008
(51) Int. Cl.: H04B 10/08, H04B 10/16, H04B 17/02

(54) **FAULT DETECTING METHOD, SYSTEM AND APPARATUS FOR PASSIVE OPTICAL NETWORK SYSTEM**

(30) Priority: 13.08.2007 CN 200710140568
(71) Applicant: Huawei Technologies Co., Ltd., Longgang District, Shenzhen Guangdong 518129 (CN)
(72) Inventor: JIANG, Hongli, Shenzhen (CN); ZHOU, Jianlin, Shenzhen (CN); LI, Kun, Shenzhen (CN)
(74) Representative: Kreuz, Georg Maria
(86) International application number: PCT/CN2008/071964
(87) International publication number: WO 2009/021456

(57) **Abstract**

A fault detecting method, system, and apparatus for a PON system and an electrical relay apparatus are provided. The method includes the following steps. An electrical relay apparatus receives and detects a signal sent by a previous apparatus. If a defect is detected in the received signal, it is determined that a fault occurs to a transmission path between the previous apparatus and the electrical relay apparatus, and a signal with no defect is formed and sent to a next apparatus. If no defect is detected, the received signal is processed according to original processes and sent to the next apparatus. The next apparatus receives and detects the signal sent by the electrical relay apparatus. If a defect is detected in the signal sent by the electrical relay apparatus, it is determined that a fault occurs to a transmission path between the next apparatus and the electrical relay apparatus.

## Description

### BACKGROUND OF THE INVENTION

### Field of the Technology

The present invention relates to the field of passive optical network (PON), and more particularly to a fault detecting method, system, and apparatus for a PON system.

### Background of the Invention

With the emergence of services such as video on demand, high-resolution television, and online games, the demand of users for network bandwidth increases day by day. A passive optical network (PON) technology is capable of effectively ensuring the "last-mile" access bandwidth and has become one of the mainstream technologies for optical access networks at present.

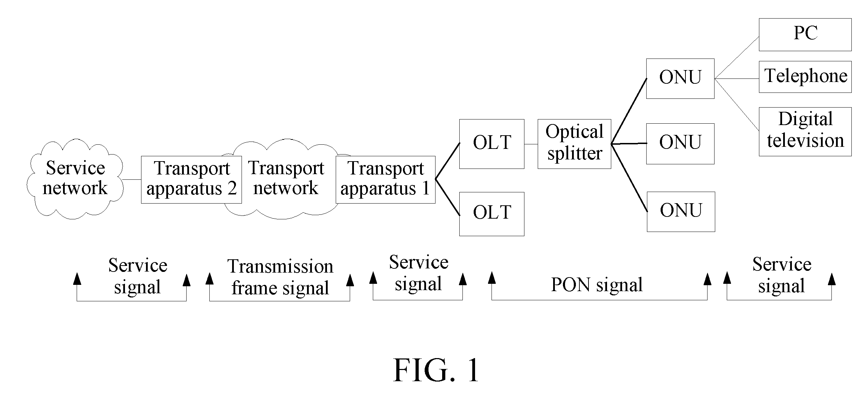

FIG. 1 shows network architecture where a conventional PON system is located. The PON system basically includes an optical line terminal (OLT) and an optical network unit (ONU). When one OLT is connected to multiple ONUs, an optical splitter is disposed between the OLT and the ONUs to realize point-to-multipoint optical power distribution. The OLT and the optical splitter are connected through main optical fibers. The optical splitter and the ONUs are connected through branch optical fibers. A signal between the OLT and the ONU is called a PON signal, a signal in a transport network is called a transmission frame signal, and other signals are called service signals. A transmission direction of a signal from the OLT to the ONU is a downstream direction, and a transmission direction from the ONU to the OLT is an upstream direction. In the conventional PON system, as the number of ONUs connected to one OLT through an optical splitter is relatively small and a distance there-between is relatively short, the number of OLTs in the network architecture where the conventional PON system is located is relatively large and the OLTs are scattered, causing inconvenient management and high apparatus investment and maintenance cost.

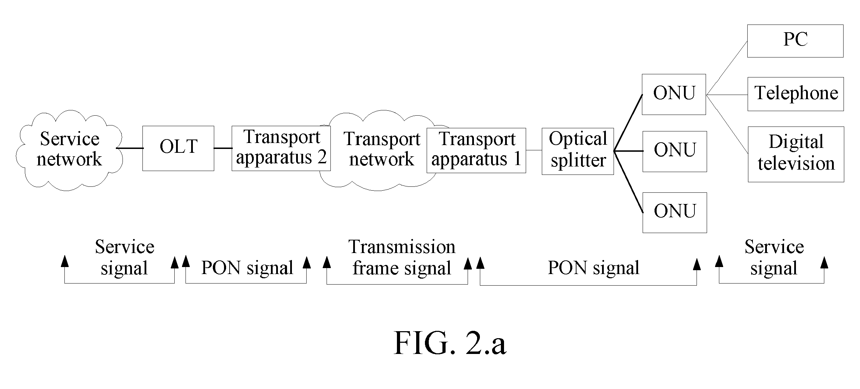

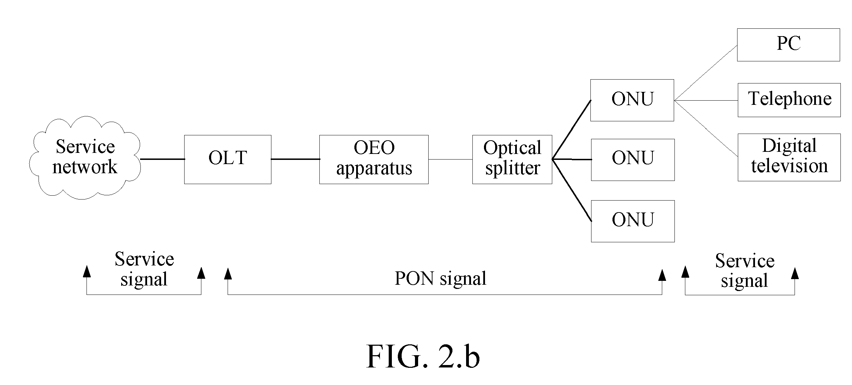

With the emergence of a next generation optical access network, for the above defects of the conventional PON system, a remote PON system appears. FIG. 2.a shows network architecture where a remote PON system is located. Referring to FIG. 2.a, an OLT is put at a distal end, so that the OLT and ONUs are located at two sides of the transport network and connected to a transport apparatus 2 and a transport apparatus 1 of the transport network respectively. Both the transport apparatus 1 and transport apparatus 2 of the transport network are electrical relay apparatus, which are adapted to convert optical signals from the OLT or the ONUs into electrical signals to be transmitted in the transport network, and convert electrical signals from the transport network into optical signals to be sent to the OLT or the ONUs. In an upstream direction, the ONU first maps a received service signal to a payload area of upstream burst packets, and forms an upstream burst time-slot stream with upstream overhead to be transmitted to the apparatus 1. The apparatus 1 receives the upstream burst time-slot stream, performs phase alignment on the upstream burst time-slot stream, and encapsulates the upstream burst time-slot stream in payload of a transmission frame signal, so as to form a transmission frame signal with transmission overhead to be transmitted on the transport network. On receiving the transmission frame signal, the apparatus 2 extracts the transmission overhead, recovers the upstream burst time-slot stream from the payload, and transmits the upstream burst time-slot stream to the OLT. The OLT receives the upstream burst time-slot stream, extracts the upstream overhead, and recovers the service signal from the payload. A processing sequence of the downstream direction is opposite to a processing sequence of the upstream direction.

FIG. 2.b shows another type of network architecture where a remote PON system is located. Referring to FIG. 2.b, no transport network but an optical-electrical-optical (OEO) apparatus exists between the ONUs and the OLT. The OEO apparatus is also an electrical relay apparatus. In the remote PON system, the OEO apparatus converts downstream optical signals sent by the OLT into electrical signals and converts the electrical signals into optical signals to be sent to the ONUs after shaping, power amplification, and other processes; and also converts upstream optical signals sent by the ONUs into electrical signals and converts the electrical signals into optical signals to be sent to the OLT after shaping, power amplification, and other processes. Therefore, optical signal attenuation caused by an excessively long distance is compensated in the remote PON system.

In the network architecture where the remote PON system is located, an access radius of the PON is increased and the number of ONUs that connected to a single OLT is increased and the number of the OLTs is decreased. The OLTs are gathered in a secondary central office, so as to avoid the problem of high management and maintenance cost due to scattered distribution of the OLTs. However, as an optical fiber transmission path and a coverage area of the remote PON are correspondingly enlarged, fault probability in the transmission path is increased. Moreover, as the number of ONUs connected to the OLT is several to dozens of times greater than the previous number, the fault in the transmission path affects a relatively larger coverage area. The service signals pass through multiple segments of transmission paths between the ONUs and the OLT. In the architecture shown in FIG. 2.a, a transmission path exists between the OLT and the transport apparatus 2, a transmission path exists between the transport apparatus 2 and the transport apparatus 1, and a transmission path exists between the transport apparatus 1 and each ONU. In the architecture shown in FIG. 2.b, a transmission path exists between the OLT and the OEO, and a transmission path exists between the OEO and each ONU. When a fault occurs to a transmission path, the failed path needs to be accurately located, that is, determining which segment of the transmission path is failed, so as to fix the fault point as soon as possible. However, no fault detecting method for a remote PON system is proposed in the prior art so far to accurately locate a transmission path where a fault occurs.

### SUMMARY OF THE INVENTION

Accordingly, the present invention is directed to a fault detecting method, system, and apparatus for a passive optical network (PON) system, so as to accurately locate a transmission path where a fault occurs in a remote PON system.

As a first aspect the present invention provides a fault detecting method for a PON system, which includes the following steps.

An electrical relay apparatus receives and detects a signal sent by a previous apparatus. If a defect is detected in the received signal, it is determined that a fault occurs to a transmission path between the previous apparatus and the electrical relay apparatus, and a signal with no defect is formed and sent to a next apparatus. If no defect is detected in the received signal, the received signal is processed according to original processes and sent to the next apparatus.

The next apparatus receives and detects the signal sent by the electrical relay apparatus. If a defect is detected in the signal sent by the electrical relay apparatus, it is determined that a fault occurs to a transmission path between the electrical relay apparatus and the next apparatus.

As a second aspect the present invention provides a fault detecting system for a PON system, which includes an electrical relay apparatus, a previous apparatus of the electrical relay apparatus, and a next apparatus of the electrical relay apparatus.

The previous apparatus of the electrical relay apparatus is adapted to send a signal to the electrical relay apparatus.

The electrical relay apparatus is adapted to receive and detect the signal sent by the previous apparatus. If a defect is detected in the received signal, it is determined that a fault occurs to a transmission path between the previous apparatus and the electrical relay apparatus, and a signal with no defect is formed and sent to the next apparatus. If no defect is detected in the received signal, the received signal is processing according to original processes and sent to the next apparatus.

The next apparatus of the electrical relay apparatus is adapted to receive and detect the signal sent by the electrical relay apparatus. If a defect is detected in the received signal, it is determined that a fault occurs to a transmission path between the electrical relay apparatus and the next apparatus.

As a third aspect the present invention provides an electrical relay apparatus, which includes a receiving unit, a defect detecting unit, a signal forming unit, a service processing unit, and a sending unit.

The receiving unit is adapted to receive a signal sent by a previous apparatus and provide the received signal to the defect detecting unit.

The defect detecting unit is adapted to receive and detect the signal provided by the receiving unit. If a defect is detected in the received signal, it is determined that a fault occurs to a transmission path between the previous apparatus and the electrical relay apparatus where the defect detecting unit is located, and the received signal is provided to the signal forming unit. If no defect is detected in the received signal, the received signal is provided to the service processing unit.

The signal forming unit is adapted to receive the signal provided by the defect detecting unit, process the signal to form a signal with no defect, and provide the signal with no defect to the sending unit.

The service processing unit is adapted to process the signal provided by the defect detecting unit according to original processes and provide the processed signal to the sending unit.

The sending unit is adapted to receive the signal provided by the signal forming unit or the service processing unit and send the received signal to a next apparatus of the electrical relay apparatus where the sending unit is located.

As a fourth aspect the present invention provides a fault detecting apparatus, which includes a receiving unit and a defect detecting unit.

The receiving unit is adapted to receive a signal sent by an electrical relay apparatus and provide the received signal to the defect detecting unit.

The defect detecting unit is adapted to detect the signal provided by the receiving unit. If a defect is detected in the signal, it is determined that a fault occurs to a transmission path between the electrical relay apparatus and the fault detecting apparatus where the defect detecting unit is located.

As can be seen from the above technical solutions, through the method, system, and apparatus provided in the embodiments of the present invention, an electrical relay apparatus receives and detects a signal sent by a previous apparatus. If a defect is detected in the received signal, it is determined that a fault occurs to a transmission path between the previous apparatus and the electrical relay apparatus, and a signal with no defect is formed and sent to a next apparatus. If no defect is detected in the received signal, the received signal is processed according to original processes and sent to the next apparatus. The next apparatus receives and detects the signal sent by the electrical relay apparatus. If a defect is detected in the signal sent by the electrical relay apparatus, it is determined that a fault occurs to a transmission path between the next apparatus and the electrical relay apparatus. Therefore, when a fault occurs to a segment of the transmission path, the apparatus at each end point of the transmission path accurately locates the failed transmission path in a remote PON system through the fault detecting method.

### BRIEF DESCRIPTION OF THE DRAWINGS

FIG. 1 is a view of network architecture where a conventional PON is located in the prior art;
FIG. 2.a is a view of network architecture where a remote PON is located in the prior art;
FIG. 2.b is a view of another type of network architecture where a remote PON is located according to an embodiment of the present invention;

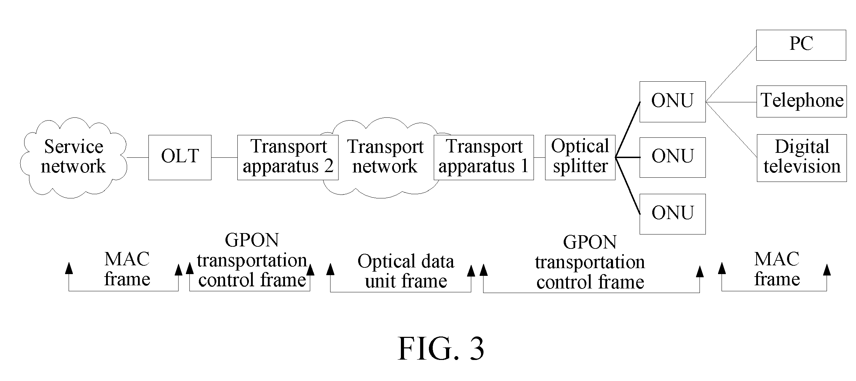

FIG. 3 is a view of network architecture where a remote GPON of an OTN is located according to an embodiment of the present invention; and

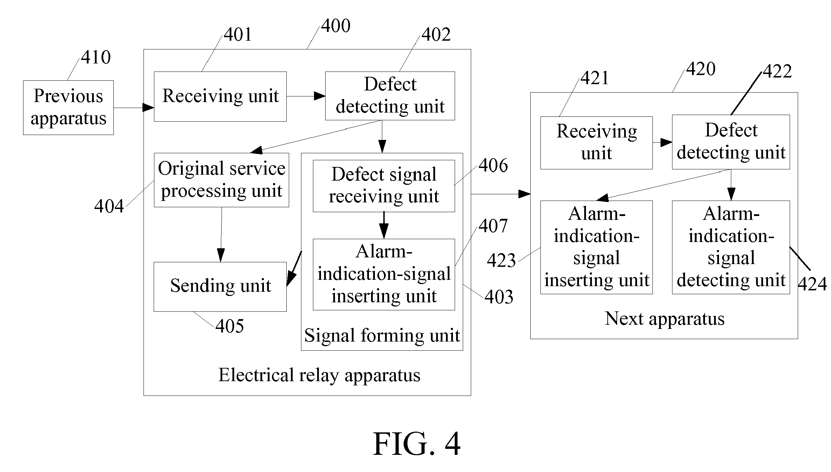

FIG. 4 is a schematic view of a fault detecting system for a PON system according to an embodiment of the present invention.

### DETAILED DESCRIPTION OF THE EMBODIMENTS

In order to make the objectives, technical solutions, and advantages of the present invention more comprehensible, the present invention is further illustrated in detail below with reference to the embodiments and the accompanying drawings.

In an embodiment, the present invention provides a method, which includes the following steps. An electrical relay apparatus receives and detects a signal sent by a previous apparatus. If a defect is detected in the received signal, it is determined that a fault occurs to a transmission path between the previous apparatus and the electrical relay apparatus, and a signal with no defect is formed and sent to a next apparatus. If no defect is detected in the received signal, the received signal is processed according to original processes and sent to the next apparatus. The next apparatus receives and detects the signal sent by the electrical relay apparatus. If a defect is detected in the signal sent by the electrical relay apparatus, it is determined that a fault occurs to a transmission path between the next apparatus and the electrical relay apparatus.

The electrical relay apparatus may be a transport apparatus 1 as shown in FIG. 2.a, or a transport apparatus 2, or an OEO apparatus in the architecture shown in FIG. 2.b. In the following embodiments, the network architecture as shown in FIG. 2.a is taken as an example to illustrate a fault detecting method for a PON system.

The method is capable of performing fault detection in a transmission process of an upstream signal or a downstream signal. The method provided in the present invention is illustrated in detail below for the transmission of a downstream signal and an upstream signal respectively.

When the transmitted signal is a downstream signal, the signal is sent to the transport apparatus 2 from an OLT. After being processed by the transport apparatus 2, the signal is sent to the transport apparatus 1 for processing and then provided to an ONU.

The transport apparatus 2 receives and detects a downstream data stream sent by the OLT. If a defect is detected in the downstream data stream, it is determined that a fault occurs to a transmission path between the OLT and the transport apparatus 2, and an alarm indication signal downstream (AISd) is inserted in the downstream data stream to form a signal with no defect. The signal inserted with the AISd is then encapsulated in payload of a transmission signal, and added with transmission overhead to form a transmission frame signal to be sent to the transport apparatus 1 through a transport network. If no defect is detected in the downstream data stream, it is determined that the transmission path between the OLT and the transport apparatus 1 is normal. The downstream data stream is then encapsulated in transmission payload of the transmission signal, and added with transmission overhead to form a transmission frame signal to be sent to the transport apparatus 1. The defect detected by the transport apparatus 2 in the downstream data stream may be signal loss, frame loss, or the like.

The transport apparatus 1 receives and detects the transmission frame signal sent by the transport apparatus 2. If a defect is detected in the transmission frame signal, it is determined that a fault occurs to a transmission path between the transport apparatus 1 and the transport apparatus 2. At this time, the transport apparatus 1 may also insert the AISd in the downstream data stream of the transmission frame signal to form a signal with no defect, and send the signal inserted with the AISd to the ONU. Further, if no defect is detected in the transmission frame signal, it is determined that a transmission path between the transport apparatus 1 and the transport apparatus 2 is normal. The transmission frame signal is decapsulated and the decapsulated downstream data stream is sent to the ONU. The defect detected by the transport apparatus 1 in the downstream transmission frame signal may be signal loss, frame loss, signal failure, or the like.

The method provided in the present invention may also be used in the process that the transport apparatus 1 sends a downstream signal to the ONU. The transport apparatus 1 serves as the electrical relay apparatus and the ONU serves as the next apparatus of the electrical relay apparatus. The transport apparatus 1 operates in the same manner as the transport apparatus 1 described above, so the details thereof may not be given herein again.

The ONU receives and detects the signal sent by the transport apparatus 1. If a defect is detected in the received signal, it is determined that a fault occurs to a transmission path between the transport apparatus 1 and the ONU. Further, if the ONU detects the AISd, it is determined that a transmission path between the transport apparatus 1 and the ONU is normal and the fault occurs in other segments of the transmission paths. The defect detected by the ONU may be signal loss, frame loss, or the like.

In the transmission process of the downstream signal, the insertion of the AISd adopted by the transport apparatus 1 and the transport apparatus 2 may be implemented as follows. A repetitive sequence of synchronization codes in a downstream frame of the downstream signal is used as an AISd to be inserted in the defective downstream data stream. Alternatively, the repetitive sequence of synchronization codes may also be used as an AISd to replace the defective downstream data stream.

When the transmitted signal is an upstream signal, the signal is sent to the transport apparatus 1 from the ONU. After being processed by the transport apparatus 1, the signal is sent to the transport apparatus 2 for processing and then provided to the OLT.

The transport apparatus 1 receives and detects an upstream burst time-slot stream sent by the ONU. If a defect is detected in the upstream burst time-slot stream, it is determined that a fault occurs to the transmission path between the ONU and the transport apparatus 1, and an alarm indication signal upstream (AISu) is inserted in the upstream burst time-slot stream to form a signal with no defect. The signal inserted with the AISu is then encapsulated in payload of a transmission signal, and added with transmission overhead to form a transmission frame signal to be sent to the transport apparatus 2 through a transport network. If no defect is detected in the upstream burst time-slot stream, it is determined that the transmission path between the ONU and the transport apparatus 1 is normal. The upstream burst time-slot stream is directly encapsulated in payload of the transmission signal, and added with physical layer overhead to form a transmission frame signal to be sent to the transport apparatus 2. The defect detected by the transport apparatus 1 in the upstream burst time-slot stream may be signal loss, frame loss, or the like.

The transport apparatus 2 receives and detects the transmission frame signal sent by the transport apparatus 1. If a defect is detected in the transmission frame signal, it is determined that a fault occurs to a transmission path between the transport apparatus 1 and the transport apparatus 2. At this time, the transport apparatus 2 may also insert the AISu in the decapsulated upstream burst time-slot stream to form a signal with no defect, and send the signal inserted with the AISu to the OLT. Further, if no defect is detected in the transmission frame signal, it is determined that a transmission path between the transport apparatus 1 and the transport apparatus 2 is normal. The transmission frame signal is decapsulated and the decapsulated upstream burst time-slot stream is sent to the OLT. The defect detected by the transport apparatus 2 in the upstream transmission frame signal may be signal loss, frame loss, signal failure, or the like.

The method provided in the present invention may also be used in the process that the transport apparatus 2 sends an upstream signal to the OLT. The transport apparatus 2 serves as the electrical relay apparatus and the OLT serves as the next apparatus of the electrical relay apparatus. The transport apparatus 2 operates in the same manner as the transport apparatus 2 described above, so the details thereof may not be given herein again.

The OLT receives and detects the signal sent by the transport apparatus 2. If a defect is detected in the received signal, it is determined that a fault occurs to a transmission path between the transport apparatus 2 and the OLT. Further, if the OLT detects the AISu, it is determined that a transmission path between the transport apparatus 2 and the OLT is normal and the fault occurs in other segments of the transmission paths. The defect detected by the OLT may be signal loss or the like.

In the transmission process of the upstream signal, the insertion of the AISu adopted by the transport apparatus 2 and the transport apparatus 1 may be implemented as follows. A repetitive sequence of preambles in an upstream frame of the upstream signal is used as an AISu to be inserted in the upstream burst time-slot stream in the defective upstream signal. Alternatively, the repetitive sequence of preambles may also be used as an AISu to replace the upstream burst time-slot stream in the defective upstream signal.

In the following, a Gigabit-PON (GPON) is taken as an example to describe a specific fault detection process in the GPON with reference to an embodiment. The GPON is a PON system initiated by a full service access network (FSAN) organization and established by the International Telecommunication Union Telecommunication Standardization Sector (ITU-T). FIG. 3 is a view of network architecture where a remote GPON of an OTN is located. In this architecture, a media access control (MAC) frame is employed for transmission of a service signal, a GPON transportation control (GTC) frame is employed for transmission of a GPON signal, and an optical data unit (ODUk) frame signal is employed for transmission of a transmission signal.

For a downstream signal, the following processes are implemented.

The transport apparatus 2 receives and detects a downstream GTC frame sent by the OLT. If no defect is detected, the transport apparatus 2 encapsulates the downstream GTC frame in the ODUk frame and sends the ODUk frame to the transport apparatus 1 through the transport network. If a defect is detected, it is determined that a fault occurs to a transmission path between the OLT and the transport apparatus 2, and the transport apparatus 2 encapsulates the AISd adapted to replace the downstream GTC frame in the ODUk frame and sends the ODUk frame to the transport apparatus 1 through the transport network.

The transport apparatus 1 receives and detects the ODUk frame. If no defect is detected, the downstream GTC frame or the AISd is decapsulated from the ODUk frame and sent to the ONU. If a defect is detected, it is determined that a fault occurs to a transmission path between the transport apparatus 2 and the transport apparatus 1, the defective signal is replaced with the AISd, and the AISd is sent to the ONU.

The ONU receives and detects the signal sent by the transport apparatus 1. If a defect is detected, it is determined that a fault occurs to a transmission path between the ONU and the transport apparatus 1. If the AISd is detected, an alarm is issued and it is determined that a transmission path between the ONU and the transport apparatus 1 is normal and the fault occurs in other transmission paths.

The insertion of the AISd in the defective signal by the transport apparatus 1 and the transport apparatus 2 is implemented as follows. For ease of illustration, a structure of a downstream frame of a GPON signal is first described in brief. The structure of the downstream frame in the GPON is shown in Table 1. A downstream frame in the GPON includes a physical control block downstream (PCBd) overhead area and a payload area. The PCBd overhead area includes a physical synchronization (PSync) field, a super-frame identification (Ident) field, a physical layer OAM downstream (PLOAMd) field, a bit interleaved parity (BIP) field, a payload length downstream (PLend) field, and an upstream bandwidth map (US BW Map) field. The PSync field occupies four bytes and includes PSync codes, and is adapted to realize synchronization between the ONU and the OLT.

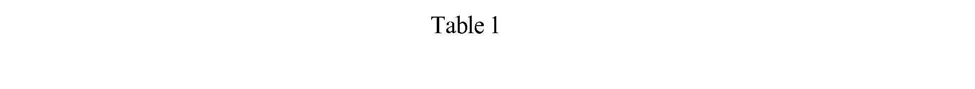

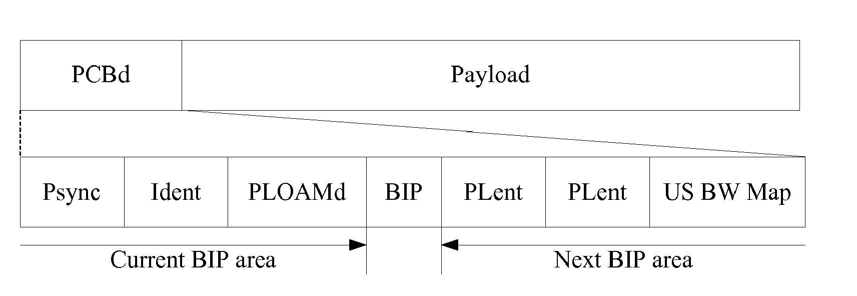

In the GPON, a structure of the inserted AISd may be shown in Table 2. A repetitive sequence of PSync codes is used as an AISd and is arranged continuously with no frame boundary. Each PSync code has four 4 bytes. If the transmission path between the transport apparatus 1 and the ONU is normal, the transport apparatus 1 sends the AISd to the ONU and the ONU is unable to detect the signal loss. An AISd detecting unit is disposed in front of a framing unit. When the AISd detecting unit detects at least two continuous PSync codes, an AISd alarm is reported and the framing unit is suppressed to detect the frame loss. The suppression processes of other defects are not discussed here one by one. A sequence of defect suppression in the ONU may be signal loss suppression, AISd suppression, frame loss suppression, signal failure suppression, and signal deterioration suppression. Therefore, the method that uses a repetitive sequence of the PSync codes as the AISd may enable the formed signal to become a signal with no defect. When the AISd is inserted, the method for replacing the whole received downstream data stream with the AISd may be adopted, or the AISd may also be inserted in the defective downstream data stream.

**Table 2**

| | | | | | |
|---|---|---|---|---|---|
| Psync | Psync | Psync | ..... | Psync | Psync |

For an upstream signal, the following processes are implemented.

The transport apparatus 1 receives and defects an upstream GTC frame sent by the ONU. If no defect is detected, the transport apparatus 1 encapsulates the upstream GTC frame in the ODUk frame and sends the ODUk frame to the transport apparatus 2 through the transport network. If a defect is detected, it is determined that a fault occurs to a transmission path between the ONU and the transport apparatus 1, and the transport apparatus 1 encapsulates the AISu adapted to replace the upstream GTC frame in the ODUk frame and sends the ODUk frame to the transport apparatus 2 through the transport network.

The transport apparatus 2 receives and detects the ODUk frame. If no defect is detected, the upstream GTC frame or the AISu is decapsulated from the ODUk frame and sent to the OLT. If a defect is detected, it is determined that a fault occurs to a transmission path between the transport apparatus 1 and the transport apparatus 2, the defective signal is replaced with the AISu, and the AISu is sent to the OLT.

The OLT receives and detects the signal sent by the transport apparatus 2. If a defect is detected, it is determined that a fault occurs to a transmission path between the transport apparatus 2 and the OLT. If the AISu is detected, an alarm is issued and it is determined that a transmission path between the transport apparatus 2 and the OLT is normal and the fault occurs in other transmission paths.

In the following, the GPON is still taken as an example to describe in detail the process of inserting the AISu. A structure of the GPON upstream frame is shown in Table 3. An upstream frame in the GPON includes a physical layer overhead upstream (PLOu) field, a physical layer operation administration and maintenance upstream (PLOAMu) field, and a dynamic bandwidth report upstream (DBRu) field. The PLOu field is adapted to realize burst synchronization, and a preamble included in the PLOu field is adapted to accomplish clock data recovery.

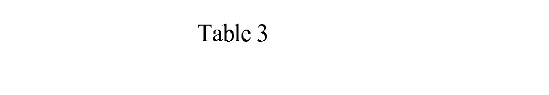

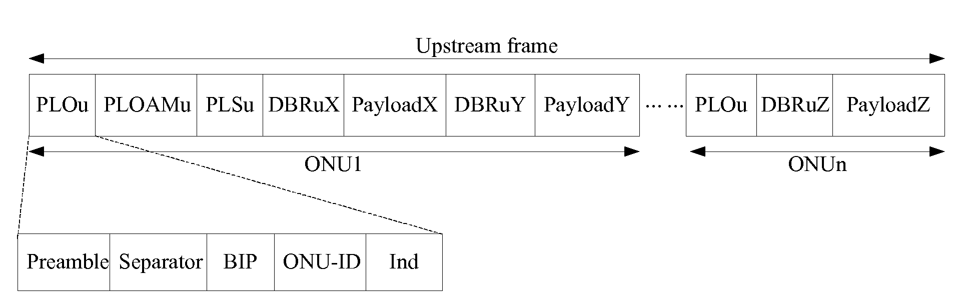

In the GPON, a structure of the inserted AISu may be shown in Table 4. A repetitive sequence of preambles is used as an AISu and is arranged continuously with no frame boundary. If the transmission path between the transport apparatus 2 and the OLT is normal, the transport apparatus 2 sends the AISu to the OLT, and the OLT is unable to detect the signal loss. A burst synchronization device of the OLT is capable of detecting the preambles, so that the OLT may not detect the loss of the upstream burst data stream. An AISu detecting unit is disposed in front of a framing unit. When the AISu detecting unit detects at least two continuous preambles, an ASIu alarm is reported and the framing unit is suppressed to detect the frame loss. The suppression processes of other defects are not discussed here one by one. A sequence of defect suppression in the OLT may be signal loss suppression, loss suppression of upstream burst time-slot streams sent by all the ONUs, AISu suppression, frame loss suppression, signal failure suppression, and signal deterioration suppression. Therefore, the method that uses a repetitive sequence of the preambles as the AISu may enable the formed signal to become a signal with no defect. When the AISu is inserted by the transport apparatus 1, the whole upstream data stream may be replaced with the AISu according to a defect of the upstream data stream, or the upstream burst time-slot stream of the ONU may be replaced with the AISu within the ONU time-slot according to a defect in the upstream burst data stream of a certain ONU. In this manner, a fault may be easily located. It is found that a fault occurs to a branch transmission path between the transport apparatus 1 and which specific ONU according to the time-slot that the replaced upstream frame is in. If it is detected that the whole upstream data stream is the AISu, it may be located that a fault occurs to a main transmission path between the ONU and the transport apparatus 1.

**Table 4**

| | | | | | |
|---|---|---|---|---|---|
| Preamble | Preamble | Preamble | ..... | Preamble | Preamble |

In an embodiment, the present invention provides a fault detecting system for a PON system. Referring to FIG. 4, the system mainly includes an electrical relay apparatus 400, a previous apparatus 410 of the electrical relay apparatus 400, and a next apparatus 420 of the electrical relay apparatus 400.

The previous apparatus 410 is adapted to send a signal to the electrical relay apparatus 400.

The electrical relay apparatus 400 is adapted to receive and detect the signal sent by the previous apparatus 410. If a defect is detected in the received signal, it is determined that a fault occurs to a transmission path between the previous apparatus 410 and the electrical relay apparatus 400, and a signal with no defect is formed and sent to the next apparatus 420.

That the electrical relay apparatus 400 forms a signal with no defect specifically includes: inserting an alarm indication signal in the defective signal to form a signal with no defect.

The next apparatus 420 is adapted to receive and detect the signal sent by the electrical relay apparatus 400. If a defect is detected in the received signal, it is determined that a fault occurs to a transmission path between the electrical relay apparatus 400 and the next apparatus 420.

In the PON system, the previous apparatus 410 may be an ONU, the electrical relay apparatus 400 may be a transport apparatus 1 of a transport network, and the next apparatus 420 may be a transport apparatus 2 of the transport network.

Alternatively, the previous apparatus 410 may be a transport apparatus 1 of a transport network, the electrical relay apparatus 400 may be a transport apparatus 2 of the transport network, and the next apparatus 420 may be an OLT.

Alternatively, the previous apparatus 410 may be an OLT, the electrical relay apparatus 400 may be a transport apparatus 2 of a transport network, and the next apparatus 420 may be a transport apparatus 1 of the transport network.

Alternatively, the previous apparatus 410 may be a transport apparatus 2 of a transport network, the electrical relay apparatus 400 may be a transport apparatus 1 of the transport network, and the next apparatus may be an ONU.

Alternatively, the previous apparatus 410 is an ONU, the electrical relay apparatus 400 is an OEO apparatus, and the next apparatus 420 is an OLT apparatus.

Alternatively, the previous apparatus 410 is an OLT, the electrical relay apparatus 400 is an OEO apparatus, and the next apparatus 420 is an ONU apparatus.

If the next apparatus 420 is an electrical relay apparatus other than the electrical relay apparatus 400, the next apparatus 420 is further adapted to insert an alarm indication signal in the received signal to form a signal with no defect and send the formed signal with no defect when detecting a defect in the received signal.

If the next apparatus 420 is the ONU or the OLT, the next apparatus 420 is further adapted to detect whether the alarm indication signal exists in the received signal, and if yes, it is determined that the transmission path between the electrical relay apparatus 400 and the next apparatus 420 is normal and the fault occurs in other transmission paths.

The electrical relay apparatus 400 includes a receiving unit 401, a defect detecting unit 402, a signal forming unit 403, an original service processing unit 404, and a sending unit 405.

The receiving unit 401 is adapted to receive a signal sent by a previous apparatus and provide the received signal to the defect detecting unit 402.

The defect detecting unit 402 is adapted to receive and detect the signal provided by the receiving unit 401. If a defect is detected in the received signal, it is determined that a fault occurs to a transmission path between the previous apparatus and the electrical relay apparatus where the defect detecting unit 402 is located, and the received signal is provided to the signal forming unit 403. If no defect is detected in the received signal, the received signal is provided to the original service processing unit 404.

The signal forming unit 403 is adapted to receive the signal provided by the defect detecting unit 402, process the signal to form a signal with no defect, and provide the signal with no defect to the sending unit 405.

The original service processing unit 404 is adapted to process the signal provided by the defect detecting unit 402 according to original processes and provide the processed signal to the sending unit 405.

The sending unit 405 is adapted to receive the signal provided by the signal forming unit 403 or the service processing unit 404 and send the received signal to the next apparatus 420 of the electrical relay apparatus.

The signal forming unit 403 includes a defect signal receiving unit 406 and an alarm-indication-signal inserting unit 407.

The defect signal receiving unit 406 is adapted to receive the signal provided by the defect detecting unit 402 and provide the signal to the alarm-indication-signal inserting unit 407.

The alarm-indication-signal inserting unit 407 is adapted to insert an alarm indication signal in the signal provided by the defect signal receiving unit 406 to form a signal with no defect and provide the signal with no defect to the sending unit 405.

The next apparatus 420 is a fault detecting apparatus, which includes a receiving unit 421 and a defect detecting unit 422.

The receiving unit 421 is adapted to receive a signal sent by the electrical relay apparatus 400 and provide the received signal to the defect detecting unit 422.

The defect detecting unit 422 is adapted to detect the signal provided by the receiving unit 421. If a defect is detected in the signal, it is determined that a fault occurs to a transmission path between the electrical relay apparatus 400 and the next apparatus 420 where the defect detecting unit 422 is located.

If the next apparatus 420 is an electrical relay apparatus other than the electrical relay apparatus 400, the next apparatus 420 further includes an alarm-indication-signal inserting unit 423. The alarm-indication-signal inserting unit 423 is adapted to receive the signal provided by the defect detecting unit 422, insert an alarm indication signal in the received signal to form a signal with no defect, and send the formed signal with no defect.

The defect detecting unit 422 is further adapted to send the signal provided by the receiving unit 421 to an alarm-indication-signal inserting unit 423 when a defect is detected in the signal provided by the receiving unit 421.

If the next apparatus 420 is the ONU or OLT, the next apparatus 420 further includes an alarm-indication-signal detecting unit 424. The alarm-indication-signal detecting unit 424 is adapted to receive the signal provided by the defect detecting unit 422 and detect whether an alarm indication signal exists in the received signal. If yes, it is determined that the transmission path between the electrical relay apparatus 400 and the next apparatus 420 where the alarm-indication-signal detecting unit 424 is located is normal and the fault occurs in other transmission paths.

The defect detecting unit 422 is further adapted to provide the received signal to an alarm-indication-signal detecting unit 424 when no defect is detected in the signal provided by the receiving unit 421.

As described above, through the method, system, and apparatus provided in the embodiments of the present invention, an electrical relay apparatus receives and detects a signal sent by a previous apparatus. If a defect is detected in the received signal, it is determined that a fault occurs to a transmission path between the previous apparatus and the electrical relay apparatus, and a signal with no defect is formed and sent to a next apparatus. If no defect is detected in the received signal, the received signal is processed according to original processes and sent to the next apparatus. The next apparatus receives and detects the signal sent by the electrical relay apparatus. If a defect is detected in the signal sent by the electrical relay apparatus, it is determined that a fault occurs to a transmission path between the next apparatus and electrical relay apparatus. Therefore, when a fault occurs to a segment of the transmission path, the apparatus at each end point of the transmission path accurately locates the failed transmission path in a remote PON system through the fault detecting method.

Furthermore, the next apparatus is capable of detecting whether an alarm indication signal exists in the received signal. If yes, it is determined that the transmission path between the electrical relay apparatus and the next apparatus is normal and the fault occurs in other transmission paths. In this manner, in combination with a detection result of the electrical relay apparatus, it may be located whether a fault occurs to other paths. For example, when the electrical relay apparatus detects no signal defect and the next apparatus detects the alarm indication signal, it indicates that the fault occurs in the transmission path before the previous apparatus.

In addition, in the embodiment, the present invention provides a method of using a repetitive sequence of synchronization codes or a repetitive sequence of preambles as an alarm indication signal. Through the method, the signal inserted with the alarm indication signal becomes a signal with no defect. During detection, when at least two continuous synchronization codes or preambles are detected, it is determined that the alarm indication signal is detected. The alarm indication signal is easy to be generated and detected. The preambles and the synchronization codes are both already included in a data frame transmitted by a PON system, and are perfectly compatible with the PON system.

The above descriptions are merely preferred embodiments of the present invention, but not intended to limit the present invention.

## Claims

1. A fault detecting method for a passive optical network (PON) system, comprising:
receiving and detecting, by an electrical relay apparatus, a signal sent by a previous apparatus, wherein if a defect is detected in the received signal, it is determined that a fault occurs to a transmission path between the previous apparatus and the electrical relay apparatus, and a signal with no defect is formed and sent to a next apparatus, and if no defect is detected in the received signal, the received signal is processed according to original processes and sent to the next apparatus; and
receiving and detecting, by the next apparatus, the signal sent by the electrical relay apparatus, wherein if a defect is detected in the received signal, it is determined that a fault occurs to a transmission path between the electrical relay apparatus and the next apparatus.

2. The method according to claim 1, wherein the defect is one or any combination of signal loss, frame loss, multi-frame loss, and signal failure.

3. The method according to claim 1, wherein the forming a signal with no defect comprises: inserting an alarm indication signal in the defective signal to form a signal with no defect, or replacing the defective signal with the alarm indication signal to form a signal with no defect.

4. The method according to claim 3, wherein when the received signal is a downstream signal, the inserted alarm indication signal is a repetitive sequence of synchronization codes of the downstream frame; and when the received signal is an upstream signal, the inserted alarm indication signal is a repetitive sequence of preambles of the upstream frame.

5. The method according to claim 3, wherein when the previous apparatus is an optical network unit (ONU), the replacing the defective signal with the alarm indication signal comprises: replacing, by the electrical relay apparatus, the defective signal with the alarm indication signal within an ONU time-slot corresponding to the defective signal.

6. The method according to claim 1, further comprising: inserting an alarm indication signal in the received signal to form a signal with no defect and sending the formed signal with no defect when the next apparatus detects a defect in the received signal.

7. The method according to claim 3, further comprising: determining that the transmission path between the electrical relay apparatus and the next apparatus is normal and the fault occurs in other transmission paths if the next apparatus detects the alarm indication signal in the signal sent by the electrical relay apparatus.

8. The method according to claim 7, wherein when a repetitive sequence of synchronization codes of a downstream frame is used as an alarm indication signal in a downstream direction, at least two continuous synchronization codes are detected in the alarm indication signal; and when a repetitive sequence of preambles of an upstream frame is used as an alarm indication signal in an upstream direction, at least two continuous preambles are detected in the alarm indication signal.

9. A fault detecting system for a passive optical network (PON) system, comprising:
a previous apparatus (410) of an electrical relay apparatus (400), adapted to send a signal to the electrical relay apparatus (400);
the electrical relay apparatus (400), adapted to receive and detect the signal sent by the previous apparatus (410), wherein if a defect is detected in the received signal, it is determined that a fault occurs to a transmission path between the previous apparatus (410) and the electrical relay apparatus (400), and a signal with no defect is formed and sent to a next apparatus (420); while if no defect is detected in the received signal, the received signal is processed according to original processes and sent to the next apparatus (420); and
the next apparatus (420) of the electrical relay apparatus (400), adapted to receive and detect the signal sent by the electrical relay apparatus (400), wherein if a defect is detected in the received signal, it is determined that a fault occurs to a transmission path between the electrical relay apparatus (400) and the next apparatus (420).

10. The system according to claim 9, wherein the previous apparatus (410) is an optical network unit (ONU), the electrical relay apparatus (400) is a first transport apparatus of a transport network, and the next apparatus (420) is a second transport apparatus of the transport network; or
the previous apparatus (410) is a first transport apparatus of a transport network, the electrical relay apparatus (400) is a second transport apparatus of the transport network, and the next apparatus (420) is an optical line terminal (OLT); or
the previous apparatus (410) is an OLT, the electrical relay apparatus (400) is a second transport apparatus of a transport network, and the next apparatus (420) is a first transport apparatus of the transport network; or
the previous apparatus (410) is a second transport apparatus of a transport network, the electrical relay apparatus (400) is a first transport apparatus of the transport network, and the next apparatus (420) is an ONU; or
the previous apparatus (410) is an ONU, the electrical relay apparatus (400) is an optical-electrical-optical (OEO) apparatus, and the next apparatus (420) is an OLT apparatus; or
the previous apparatus (410) is an OLT, the electrical relay apparatus (400) is an optical-electrical-optical (OEO) apparatus, and the next apparatus (420) is an ONU apparatus.

11. The system according to claim 9, wherein the forming, by the electrical relay apparatus (400), a signal with no defect comprises: inserting an alarm indication signal in the defective signal to form a signal with no defect.

12. The system according to claim 9, wherein the next apparatus (420) is further adapted to insert an alarm indication signal in the received signal to form a signal with no defect and send the formed signal with no defect when detecting a defect in the received signal.

13. The system according to claim 11, wherein the next apparatus (420) is further adapted to detect whether the alarm indication signal exists in the received signal, and if yes, it is determined that the transmission path between the electrical relay apparatus (400) and the next apparatus (420) is normal and the fault occurs in other transmission paths.

14. An electrical relay apparatus, comprising:
a receiving unit (401), adapted to receive a signal sent by a previous apparatus and provide the received signal to a defect detecting unit (402);
the defect detecting unit (402), adapted to receive and detect the signal provided by the receiving unit (401), wherein if a defect is detected in the received signal, it is determined that a fault occurs to a transmission path between the previous apparatus and the electrical relay apparatus where the defect detecting unit (402) is located, and the received signal is provided to a signal forming unit (403);
the signal forming unit (403), adapted to receive the signal provided by the defect detecting unit (402), process the signal to form a signal with no defect, and provide the signal with no defect to a sending unit (405); and
the sending unit (405), adapted to receive the signal provided by the signal forming unit (403) and send the received signal to a next apparatus of the electrical relay apparatus where the sending unit (405) is located.

15. The apparatus according to claim 14, wherein the signal forming unit (403) comprises:
a defect signal receiving unit (406), adapted to receive the signal provided by the defect detecting unit (402) and provide the signal to an alarm-indication-signal inserting unit (407); and
the alarm-indication-signal inserting unit (407), adapted to insert an alarm indication signal in the signal provided by the defect signal receiving unit (406) to form a signal with no defect and provide the signal with no defect to the sending unit (405).

16. A fault detecting apparatus, comprising:
a receiving unit (421), adapted to receive a signal sent by an electrical relay apparatus and provide the received signal to a defect detecting unit (422); and
the defect detecting unit (422), adapted to detect the signal provided by the receiving unit (421), wherein if a defect is detected in the signal, it is determined that a fault occurs to a transmission path between the electrical relay apparatus and the fault detecting apparatus where the defect detecting unit (422) is located.

17. The apparatus according to claim 16, further comprising an alarm-indication-signal inserting unit (423), wherein
the defect detecting unit (422) is further adapted to send the signal provided by the receiving unit (421) to the alarm-indication-signal inserting unit (423) when a defect is detected in the signal provided by the receiving unit (421); and
the alarm-indication-signal inserting unit (423) is adapted to receive the signal provided by the defect detecting unit (422), insert an alarm indication signal in the received signal to form a signal with no defect, and send the formed signal with no defect.

18. The apparatus according to claim 16, further comprising an alarm-indication-signal detecting unit (424), wherein
the defect detecting unit (422) is further adapted to provide the received signal to the alarm-indication-signal detecting unit (424) when no defect is detected in the signal provided by the receiving unit (421); and
the alarm-indication-signal detecting unit (424) is adapted to receive the signal provided by the defect detecting unit (422) and detect whether an alarm indication signal exists in the received signal, wherein if yes, it is determined that the transmission path between the electrical relay apparatus and the fault detecting apparatus where the alarm-indication-signal detecting unit (424) is located is normal and the fault occurs in other transmission paths.
